# EUROPEAN PATENT SPECIFICATION

(11) **EP 2 493 232 B1**
(45) Date of publication and mention of the grant of the patent: **20.04.2016**
(21) Application number: 11155796.3
(22) Date of filing: 24.02.2011
(51) Int. Cl.: H04W 12/08, G07C 9/00

(54) **Personnel access system with verification features utilizing near field communication (NFC) and related methods**
Personalzugangssystem mit Prüfungsmerkmalen mit Nahfeldkommunikation und zugehörige Verfahren
Système d'accès personnel doté de fonctions de vérification utilisant une communication de champ proche et procédés apparentés

(43) Date of publication of application: 29.08.2012
(73) Proprietor: BlackBerry Limited, Waterloo, ON N2K 0A7 (CA)
(72) Inventor: Carbonell Duque, Santiago, Bogota (CO); Zubiri, Alberto Daniel, Mississauga Ontario L4W 0B4 (CA); Buczek, Tomasz, Mississauga Ontario L4W 0B4 (CA)
(74) Representative: Hibbert, Juliet Jane Grace

(56) References cited:
- WO-A1-01/63425
- WO-A1-2007/126375
- US-A1- 2009 023 476
- US-A1- 2009 066 476

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

International patent application no. WO 0163425 describes a system and method for, by means of a mobile terminal, wireless hotel search and selection, reservation/booking, check-in, room access control, check-out and payment services for hotel customers. The mobile terminal comprises a mobile telephone and processing unit, operating with wireless applications, for wireless communication with a hotel search and reservation server and a reservation/IT system of a selected hotel, and a short-range wireless device for wireless communication with wireless devices of door locks and user locating arrangements, respectively. By means of the wireless application of the mobile terminal, the user reserves a hotel room. A hotel room key token is transferred from the reservation/IT system to the wireless device of the mobile terminal, and hence to the wireless door lock. When the terminal and the wireless door lock are in-range, the hotel room key token is transferred from mobile terminal to the wireless door lock, the door is unlocked and check-in is registered. On departure, exit or expiration of the reservation period, the system provides wireless check-out and electronic bill settlement.

US Patent application no. 2009/066476 describes an electronic lock with keyless, card-less digital key system is provided for use in residential and commercial buildings. A method of self-service remote assignment and access authorization to the facility for a specified period of time, and consequent contact-less operation of door locks by means of a mobile device, is described. The method requires no interaction with the facility's front desk or reception or management for checking in, checking out, payments, or access key pick up or drop off.

### Brief Description of the Drawings

FIG. 1 is a schematic block diagram of a personnel access system in accordance with an example embodiment.
FIG. 2 is a flow diagram illustrating method aspects associated with the system of FIG. 1.
FIG. 3 is a schematic block diagram of an example embodiment of the mobile wireless communications device of FIG. 1 shown in greater detail.
FIG. 4 is a schematic block diagram illustrating example components of a mobile wireless communications device that may be used with the devices of FIGS. 1 and 3.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a personnel access system is disclosed herein which may include at least one mobile wireless communications device comprising a first near field communication (NFC) device, a wireless device, and a first controller coupled with the first NFC device and the wireless device and configured to generate an access request. The system may further include an access control device associated with a personnel access position and comprising a second NFC device configured to receive the access request from the first NFC device based upon proximity therewith, and a second controller coupled with the second NFC device and configured to generate a verification request for the at least one mobile wireless communications device based upon the received access request. The system may also include a verification device configured to receive the verification request from the access control device and, based thereon, send a verification message to the at least one mobile wireless communications device. More particularly, the first controller may be further configured to receive the verification message via the wireless device and, based thereon, generate verification data. Also, the second controller may be further configured to selectively grant personnel access based upon the verification data. Accordingly, the system may advantageously provide an enhanced level of security for providing personnel access based upon NFC.

The at least one mobile wireless communications device may have a unique identification (UID) associated therewith, and the verification device may be configured to send the verification message to the at least one mobile wireless communications device based upon the UID. The first controller may be configured to send the verification data to the access control device via the first NFC device. By way of example, the verification message may comprise an electronic mail (email) message, a peer-to-peer message, or a short message service (SMS) message, etc.

Additionally, the at least one mobile wireless communications device may further comprise an input device coupled to the first controller, and the first controller may be further configured to generate the verification data based upon the input device and the message data. The first controller may be further configured to receive a password via the input device and send the verification data to the access control device. By way of example, the input device may comprise a keypad, a biometric sensor, an optical sensor, etc. Also by way of example, the wireless device may comprise a cellular receiver. Furthermore, the second controller may be configured to send the verification request to the verification device via a wide area network.

A related mobile wireless communications device, and a related access control device, such as those described briefly above, are also provided. In addition, a related personnel access method may include generating an access request with at least one mobile wireless communications device, sending the access request from the at least one mobile wireless communications device to an access control device via near field communication (NFC) based upon proximity therewith, and sending a verification request for the at least one mobile wireless communications device from the access control device to a verification device based upon the received access request. The method may further include sending a verification message from the verification device to the at least one mobile wireless communications device based upon the verification request, generating verification data at the at least one mobile wireless communications device based upon the verification message, and selectively granting personnel access with the access control device based upon the verification data.

A related computer-readable medium may have computer-executable instructions for causing a mobile wireless communications device comprising an NFC device and a wireless device to perform steps comprising generating and communicating an access request to an access control device associated with a personnel access position via the NFC device, where the access control device is configured to generate a verification request for the at least one mobile wireless communications device based upon the access request and communicate the verification request to a verification device. The steps may further include receiving a verification message from the verification device via the wireless device, where the verification message is generated based upon the verification request, and generating verification data based upon the received verification message for causing the access control device to selectively grant personnel access.

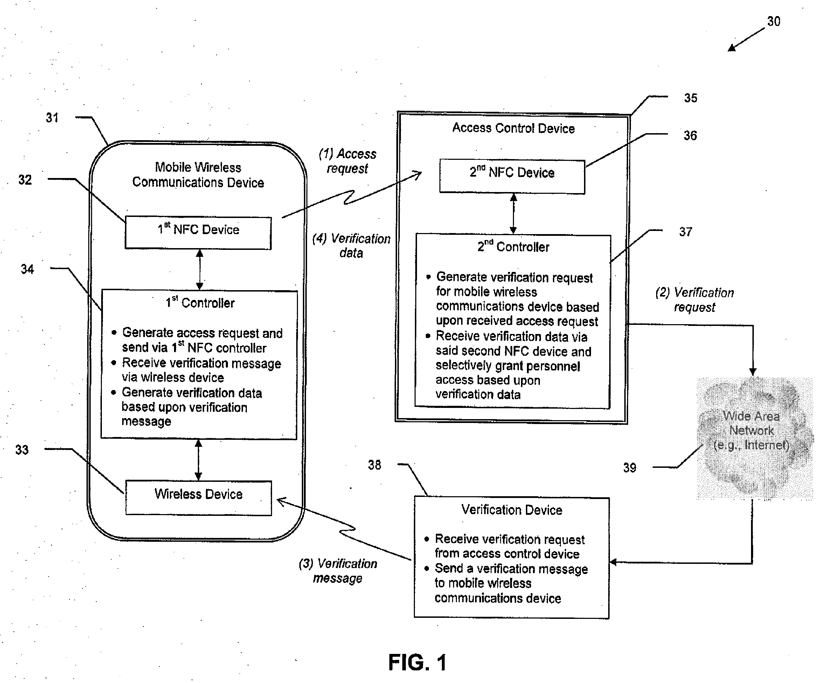

Referring initially to FIGS. 1 through 3, an example personnel access system **30** and related method aspects are first described. The system **30** illustratively includes one or more mobile wireless communications devices **31,** which are also referred to as "mobile devices" herein. By way of example, mobile devices such as portable or personal media players (e.g., music or MP3 players, video players, etc.), portable gaming devices, portable or mobile telephones, smartphones, tablet computers, electronic readers ("e-readers"), etc., may be used, although other suitable types of mobile devices may also be used in various embodiments.

The mobile device **31** illustratively includes a first near field communication (NFC) device **32,** a wireless device **33,** and a first controller **34** coupled to the first NFC device **32** and the wireless device **33.** By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

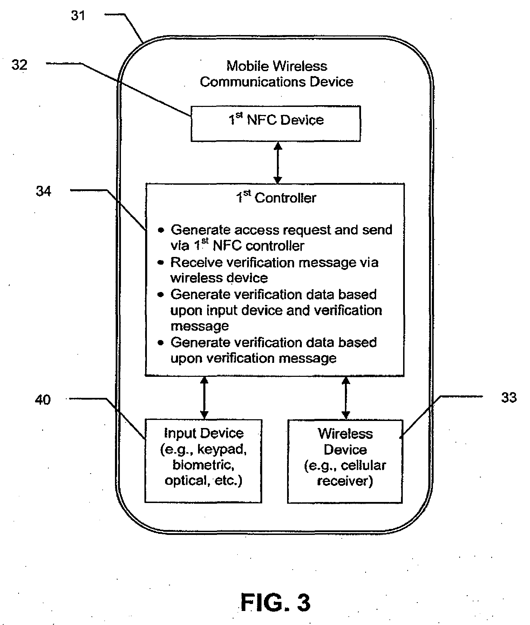

In the example of FIG. 3, the wireless device 33 is a cellular device (e.g., a cellular receiver or transceiver). However, it will be appreciated that other wireless communications formats may also be used, such as Bluetooth, WiFi, WiMAX, etc., for example. The first controller **34** may be implemented using a combination of hardware (e.g., processor, memory, etc.) and software (e.g., a computer-readable medium having computer-executable instructions), for example, to perform the various operations or functions described herein.

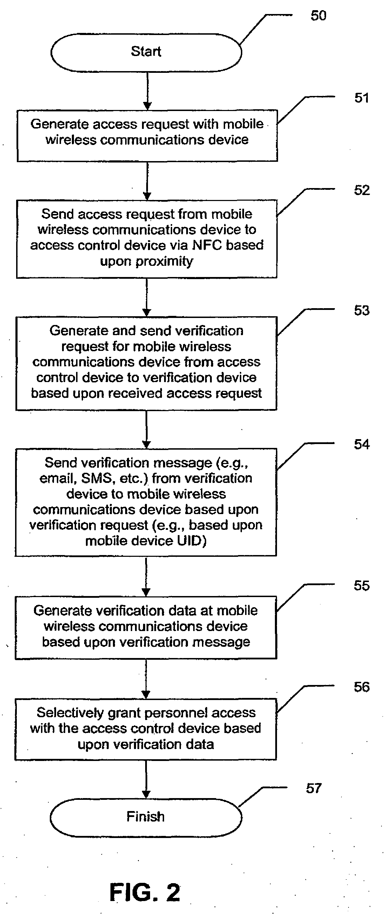

Now referring to FIG. 2, beginning at Block **50,** the first controller **34** is configured to generate an access request, at Block **51.** More particularly, the first controller **34** may be configured to cooperate with the first NFC device **32** to communicate or send the access request to an access control device **35** via NFC, at Block **52.** The access control device **35** is associated with a personnel access position. By way of example, the personnel access position may correspond to a security door which is locked to prevent unauthorized access to a particular physical area. In other example embodiments, however, the personnel access position may correspond to a security gate or turnstile, or to a secure object such as a safe, locker, or a vehicle, for example.

The access control device **35** illustratively includes a second NFC device **36** and a second controller **37** coupled to the second NFC device **36.** It should be noted that these components may be co-located or separately located in different embodiments. For example, the second NFC device **36** may be located at the personnel access position, and the second controller **37** may be co-located with the second NFC device **36** or remotely connected thereto, such as over a local area network (LAN), wireless communications link, the Internet, etc. The second controller **37** may also be implemented using hardware and software components, for example.

The second NFC device **36** is configured to communicate with the first NFC device **32** based upon proximity therewith, as described above, to receive the access request. For example, when the mobile device **31** is swiped or bumped with the second NFC device **36,** NFC communications are established between the first NFC device **32** and second NFC device **36,** and the access request is communicated or sent via NFC to the second NFC device **36.** By way of example, the mobile device **31** may have a unique identification (UID) associated therewith, and the access request may include the UID to identify the given mobile device (and, therefore, a user associated with the mobile device) that is attempting to obtain access.

Rather than merely checking to see if the UID (or other identifier) of the mobile device **31** is on an approved mobile device security list, for example, the access control device **35** advantageously initiates additional security measures to verify whether personnel access should be granted. For example, in some cases the mobile device **31** may be lost or stolen from its rightful owner, in which case someone else may attempt to surreptitiously gain access via the access control device **35** using the mobile device. If the access control device **35** were to end its security check after determining that the mobile device **31** (which is associated with an authorized user) is on an approved mobile device security list, then an unauthorized person would be granted access merely by possessing the mobile device of the authorized user.

However, the second controller **37** is advantageously configured to generate a verification request for the mobile device **31** based upon the received access request, and send the verification request to a verification device **38,** at Block **53.** By way of example, the verification request may include the UID of the mobile device **31,** or other data that identifies the given mobile device to the verification device **38.** For example, the verification device **38** may comprise a server that is remotely located from the access control device **35** and communicates with the access control device via a network, such as a wide area network **39** (e.g., the Internet). However, in some embodiments the verification device **38** may be co-located with the access control device **35,** i.e., "on-site" adjacent the personnel access position, and they may communicate via a LAN, wireless link, etc. Moreover, other suitable verification devices than a server may be used in some applications.

The verification device **38** is configured to receive the verification request from the access control device **35** and, based thereon, send a verification message to the mobile device **31,** at Block **54.** By way of example, the verification message may comprise an electronic mail (email) message, short message service (SMS) message, peer-to-peer message, etc. That is, the message is directed to a unique address (e.g., the UID) associated with the mobile device **31,** which in the case of an email the UID comprises an email address, and in the case of an SMS message the UID comprises a telephone number. However, other UIDs may also be used, such as an IMEI number, a PIN number, etc.

The first controller **34** is further configured to receive the verification message via the wireless device **33** and, based thereon, send verification data to the access control device **35,** such as via the first NFC device **32** (although this may also be done via the wireless device **33** and the verification device **38** in some example embodiments) at Block **55.** In accordance with one example, the verification data may be included in the verification message. That is, an alphanumeric verification sequence, etc., may be included in the message to pass along to the access control device **35.** By way of example, the verification data may comprise a pseudorandom data, may be single or one-time use data, a rolling PIN code, expire after a certain duration, etc.

The verification data may be made available to provide to the access control device **35** upon opening of the verification message on the mobile device **31,** for example. Because access to messages received on the mobile device **31** may be restricted (e.g., through password protection, etc.), this may advantageously be used to verify that the proper user of the mobile device **31** does indeed have it in his possession. That is, simply having possession of the mobile device **31** would not be sufficient to gain access to the physical location controlled by the access control device **35.** Rather, one would also have to have access to the email, SMS message, etc., that will be addressed and sent directly to the address, phone number, etc., known to be associated with the intended recipient and user of the mobile device **31.** For example, a password or other factor of authentication may need to be entered via the input device **40** to switch the mobile device **31** from a locked state into an unlocked state in which the verification message may be viewed or used. In one example use case, a user may enter a device password to obtain access to an access code that the verification device 38 sends to the mobile device **31.**

In accordance with another example, the mobile device **31** may further include one or more input devices **40** (FIG. 3), and the verification data may be generated also based upon input from the input device **40.** In one example, input device **40** comprises a keypad. To generate proper verification data, the verification message may prompt a user to enter an alphanumeric verification sequence (e.g., a pseudorandom key, etc.) included in the message, for example. In another example, input device **40** comprises an audio input device (e.g., microphone), and the verification message may prompt a user to record a particular speech pattern, etc., to generate proper verification data. In yet another example, input device **40** comprises a biometric sensor (e.g., a fingerprint sensor), and the verification message may prompt the user for appropriate biometric input to generate the verification data. In still another example, input device **40** comprises an optical sensor (e.g., a digital camera), and the user may be prompted by the verification message to capture an image of something at the personnel access position for verification purposes (e.g., a bar code or QR code, etc.).

The second controller **37** may be further configured to receive the verification data generated or provided by the mobile device **31** via the second NFC device **36** (although in some embodiments verification data (e.g., PIN, etc.) may be provided at the access control device (e.g., via a keypad, etc.)), and selectively grant personnel access based thereon, at Block **56,** which illustratively concludes the method of FIG. 2 (Block **57**). That is, in addition to initially determining that the mobile device **31** is authorized for personnel access, which may be done prior to sending the verification request to the verification device **38,** the access control device **35** also verifies that the correct verification data is provided by the mobile device **31,** responsive to a verification message uniquely addressed to the mobile device **31,** before providing personnel access. This advantageously helps ensure that the operator or user that has possession of the mobile device **31** is in fact the user assigned to or associated with the mobile device, and therefore authorized for gaining personnel access. The second controller **37** may verify the received verification data based upon previously stored information (e.g., by comparison to a reference fingerprint or voice print), or via communication with the verification device **38** (e.g., to retrieve the pseudorandom password sent to the mobile device **31** for comparison, etc.). In some example embodiments, the verification device **38** may perform the requisite verification or comparison operations (e.g., fingerprint comparison, voice print comparison, etc.).

Accordingly, the system **30** advantageously provides an additional layer of security for physical access control situations. For example, it may allow companies, governmental institutions, educational institutions, financial institutions, and other owners or tenants of real property, etc., to control after hours access to buildings and rooms with high value or sensitive equipment or information. In this regard, the additional verification performed by sending the verification to the verification device **38** may be selectively enabled, such as during particular times of the day (e.g., after-hours) when a personnel access position is not otherwise attended by a receptionist or security guard, for example. Such access control features may be set by a system administrator with access to the access control device **35** or the verification device **38,** for example.

In accordance with one example implementation using the BlackBerry communications infrastructure from the present assignee Research in Motion Limited, the verification device **38** may be implemented using the BlackBerry Enterprise Server (BES). In this regard, a BlackBerry PIN message may be used as the verification message, for example. However, it will be noted that other suitable verification devices and verification message types may be used in difference embodiments.

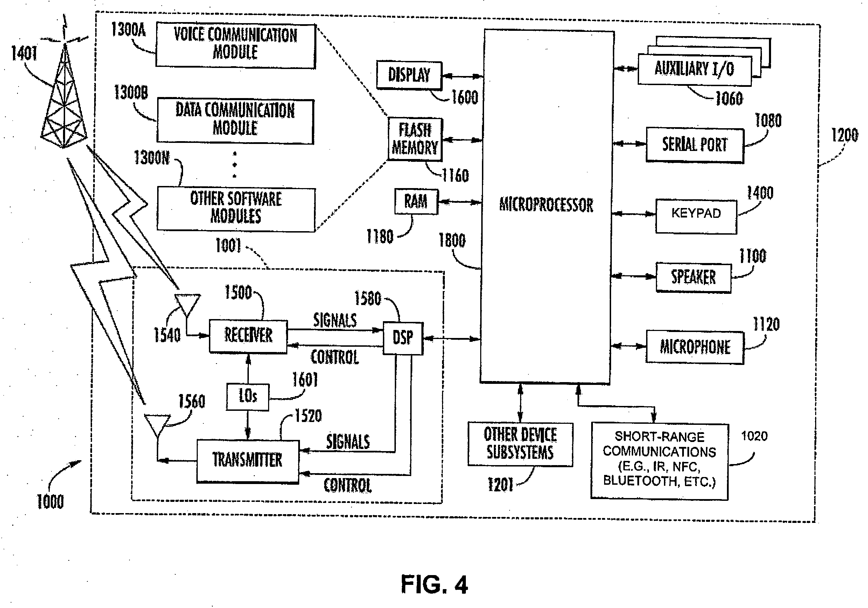

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer systems.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device 1060, such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A personnel access system (30) comprising:
at least one mobile wireless communications device (31) comprising
a first near field communication (NFC) device (32),
a wireless device (33), and
a first controller (34) coupled with said first NFC device and said wireless device, the first controller being configured to generate an access request;
an access control device (35) associated with a personnel access position, the access control device comprising
a second NFC device (36) configured to receive the access request from said first NFC device based upon proximity therewith, and
a second controller (37) coupled with said second NFC device, the second controller being configured to generate, in response to receiving the access request, a verification request for the at least one mobile wireless communications device based upon the received access request; and
a verification device (38) configured to receive the verification request from said access control device and, based thereon, send a verification message to said at least one mobile wireless communications device;
said first controller being further configured to receive the verification message via said wireless device and, based thereon, generate verification data;
said second controller being further configured to selectively grant personnel access based upon the verification data.

2. The personnel access system (30) of Claim 1 wherein said at least one mobile wireless communications device (31) has a unique identification (UID) associated therewith; and wherein said verification device (38) is configured to send the verification message to said at least one mobile wireless communications device based upon the UID.

3. The personnel access system (30) of Claim 1 wherein said first controller (34) is further configured to send the verification data to said access control device (35) via said first NFC device (32).

4. The personnel access system (30) of Claim 1 wherein the verification message comprises at least one of an electronic mail (email) message, a peer-to-peer message, or a short message service (SMS) message.

5. The personnel access system (30) of Claim 1 wherein said at least one mobile wireless communications device (31) further comprises an input device (40) coupled to said first controller (34); and wherein said first controller is further configured to generate the verification data based upon said input device.

6. A mobile wireless communications device (31) comprising:
a near field communication (NFC) device (32),
a wireless device (33), and
a controller (34) coupled with said NFC device and said wireless device, the controller being configured to
generate and communicate an access request to an access control device (35) associated with a personnel access position via said NFC device,
in response to communicating the access request to the access control device, receive a verification message from a verification device (38) via said wireless device, and
generate verification data based upon the received verification message for causing the access control device (35) to selectively grant personnel access.

7. The mobile wireless communications device (31) of Claim 6 wherein said controller (34) is further configured to send the verification data to the access control device (35) via said NFC device (32).

8. The mobile wireless communications device (31) of Claim 6 further comprising an input device (40) coupled to said controller (34); and wherein said controller is further configured to generate the verification data based upon said input device.

9. A personnel access method comprising:
generating an access request with at least one mobile wireless communications device (31);
sending the access request from the at least one mobile wireless communications device to an access control device (35) via near field communication (NFC) based upon proximity therewith;
in response to communicating the access request to the access control device, sending a verification request for the at least one mobile wireless communications device from the access control device to a verification device (38) based upon the received access request;
sending a verification message from the verification device to the at least one mobile wireless communications device based upon the verification request;
generating verification data at the at least one mobile wireless communications device based upon the verification message; and
selectively granting personnel access with the access control device based upon the verification data.

10. The method of Claim 9 wherein the at least one mobile wireless communications device (31) has a unique identification (UID) associated therewith; and wherein sending the verification message comprises sending the verification message to the at least one mobile wireless communications device based upon the UID.

11. The method of Claim 9 further comprising sending the verification data from the at least one mobile wireless communications device (31) to the access control device (35) via NFC.

12. The method of Claim 9 wherein the verification message comprises at least one of an electronic mail (email) message, a peer-to-peer message, or a short message service (SMS) message.

13. The method of Claim 9 wherein the at least one mobile wireless communications device (31) further comprises an input (40) device coupled with the first controller (34); and further comprising generating the verification data based upon the input device.

14. The method of Claim 9, wherein the at least one mobile wireless communications device (31) further comprises an input device (40), the method further comprising receiving a password via the input device and sending the verification data to the access control device (35) based upon the password.

15. The method of Claim 9 wherein sending the verification request comprises sending the verification request from the access control device (35) to the verification device (38) via a wide area network (39).

## Patentansprüche

1. Ein Personenzugangssystem (30), das aufweist:
zumindest eine mobile drahtlose Kommunikationsvorrichtung (31), die aufweist:
eine erste Nahfeldkommunikations(NFC - Near Field Communication)-Vorrichtung (32),
eine drahtlose Vorrichtung (33), und
eine erste Steuervorrichtung (34), die mit der ersten NFC-Vorrichtung und der drahtlosen Vorrichtung gekoppelt ist, wobei die erste Steuervorrichtung konfiguriert ist zum Erzeugen einer Zugangsanforderung;
eine Zugangssteuervorrichtung (35), die mit einer
Personenzugangsposition assoziiert ist, wobei die
Zugangssteuervorrichtung aufweist
eine zweite NFC-Vorrichtung (36), die konfiguriert ist zum Empfangen der Zugangsanforderung von der ersten NFC-Vorrichtung basierend auf einer Nähe mit dieser, und
eine zweite Steuervorrichtung (37), die mit der zweiten NFC-Vorrichtung gekoppelt ist, wobei die zweite Steuervorrichtung konfiguriert ist zum Erzeugen, in Reaktion auf das Empfangen der Zugangsanforderung, einer Verifizierungsanforderung für die zumindest eine mobile drahtlose Kommunikationsvorrichtung basierend auf der empfangenen Zugangsanforderung; und
eine Verifizierungsvorrichtung (38), die konfiguriert ist zum Empfangen der Verifizierungsanforderung von der Zugangssteuervorrichtung und, darauf basierend, zum Senden einer Verifizierungsnachricht an die zumindest eine mobile drahtlose Kommunikationsvorrichtung;
wobei die erste Steuervorrichtung weiter konfiguriert ist zum Empfangen der Verifizierungsnachricht über die drahtlose Vorrichtung und, darauf basierend, zum Erzeugen von Verifizierungsdaten;
wobei die zweite Steuervorrichtung weiter konfiguriert ist zum selektiven Gewähren eines Zugangs für Personen basierend auf den Verifizierungsdaten.

2. Das Personenzugangssystem (30) gemäß Anspruch 1, wobei die zumindest eine mobile drahtlose Kommunikationsvorrichtung (31) eine damit assoziierte eindeutige Identifikation (UID - unique identification) hat; und wobei die Verifizierungsvorrichtung (38) konfiguriert ist zum Senden der Verifizierungsnachricht an die zumindest eine mobile drahtlose Kommunikationsvorrichtung basierend auf der UID.

3. Das Personenzugangssystem (30) gemäß Anspruch 1, wobei die erste Steuervorrichtung (34) weiter konfiguriert ist zum Senden der Verifizierungsdaten an die Zugangssteuervorrichtung (35) über die erste NFC-Vorrichtung (32).

4. Das Personenzugangssystem (30) gemäß Anspruch 1, wobei die Verifizierungsnachricht zumindest eine aus einer Email(electronic mail)-Nachricht, einer Peer-to-Peer-Nachricht oder einer Kurznachrichtendienst(SMS - short message service)-Nachricht aufweist.

5. Das Personenzugangssystem (30) gemäß Anspruch 1, wobei die zumindest eine mobile drahtlose Kommunikationsvorrichtung (31) weiter eine Eingangsvorrichtung (40) aufweist, die mit der ersten Steuervorrichtung (34) gekoppelt ist; und wobei die erste Steuervorrichtung weiter konfiguriert ist zum Erzeugen der Verifizierungsdaten basierend auf der Eingangsvorrichtung.

6. Eine mobile drahtlose Kommunikationsvorrichtung (31), die aufweist:
eine Nahfeldkommunikations(NFC - Near Field Communication)-Vorrichtung (32),
eine drahtlose Vorrichtung (33), und
eine Steuervorrichtung (34), die mit der NFC-Vorrichtung und der drahtlosen Vorrichtung gekoppelt ist, wobei die Steuervorrichtung konfiguriert ist zum
Erzeugen und Kommunizieren einer Zugangsanforderung an eine Zugangssteuervorrichtung (35), die mit einer Personenzugangsposition assoziiert ist, über die NFC-Vorrichtung, als Reaktion auf das Kommunizieren der Zugangsanforderung an die Zugangssteuervorrichtung, Empfangen einer Verifizierungsnachricht von einer Verifizierungsvorrichtung (38) über die drahtlose Vorrichtung, und
Erzeugen von Verifizierungsdaten basierend auf der empfangenen Verifizierungsnachricht, um zu veranlassen, dass die Zugangssteuervorrichtung (35) selektiv einen Personenzugang gewä h rt.

7. Die mobile drahtlose Kommunikationsvorrichtung (31) gemäß Anspruch 6, wobei die Steuervorrichtung (34) weiter konfiguriert ist zum Senden der Verifizierungsdaten an die Zugangssteuervorrichtung (35) über die NFC-Vorrichtung (32).

8. Die mobile drahtlose Kommunikationsvorrichtung (31) gemäß Anspruch 6, die weiter eine Eingangsvorrichtung (40) aufweist, die mit dem Steuervorrichtung (34) gekoppelt ist; und wobei die Steuervorrichtung weiter konfiguriert ist zum Erzeugen der Verifizierungsdaten basierend auf der Eingangsvorrichtung.

9. Personenzugangsverfahren, das aufweist:
Erzeugen einer Zugangsanforderung mit zumindest einer mobilen drahtlosen Kommunikationsvorrichtung (31);
Senden der Zugangsanforderung von der zumindest einen mobilen drahtlosen Kommunikationsvorrichtung an eine Zugangssteuervorrichtung (35) über eine Nahfeldkommunikation (NFC - Near Field Communication) basierend auf einer Nähe zu dieser;
in Reaktion auf das Kommunizieren der Zugangsanforderung an die Zugangssteuervorrichtung, Senden einer Verifizierungsanforderung für die zumindest eine mobile drahtlose Kommunikationsvorrichtung von der Zugangssteuervorrichtung an eine Verifizierungsvorrichtung (38) basierend auf der empfangenen Zugangsanforderung;
Senden einer Verifizierungsnachricht von der Verifizierungsvorrichtung an die zumindest eine mobile drahtlose Kommunikationsvorrichtung basierend auf der Verifizierungsanforderung;
Erzeugen von Verifizierungsdaten an der zumindest einen mobilen drahtlosen Kommunikationsvorrichtung basierend auf der Verifizierungsnachricht; und
selektives Gewähren eines Personenzugangs mit der Zugangssteuervorrichtung basierend auf den Verifizierungsdaten.

10. Das Verfahren gemäß Anspruch 9, wobei die zumindest eine mobile drahtlose Kommunikationsvorrichtung (31) eine damit assoziierte eindeutige Identifikation (UID - unique identification) hat; und wobei das Senden der Verifizierungsnachricht aufweist ein Senden der Verifizierungsnachricht an die zumindest eine mobile drahtlose Kommunikationsvorrichtung basierend auf der UID.

11. Das Verfahren gemäß Anspruch 9, das weiter ein Senden der Verifizierungsdaten von der zumindest einen mobilen drahtlosen Kommunikationsvorrichtung (31) an die Zugangssteuervorrichtung (35) über NFC aufweist.

12. Das Verfahren gemäß Anspruch 9, wobei die Verifizierungsnachricht zumindest eine aus einer Email(electronic mail)-Nachricht, einer Peer-to-Peer-Nachricht oder einer Kurznachrichtendienst(SMS - short message service)-Nachricht aufweist.

13. Das Verfahren gemäß Anspruch 9, wobei die zumindest eine mobile drahtlose Kommunikationsvorrichtung (31) weiter eine Eingangsvorrichtung (40) aufweist, die mit der ersten Steuervorrichtung (34) gekoppelt ist; und weiter aufweist ein Erzeugen der Verifizierungsdaten basierend auf der Eingangsvorrichtung.

14. Das Verfahren gemäß Anspruch 9, wobei die zumindest eine mobile drahtlose Kommunikationsvorrichtung (31) weiter eine Eingangsvorrichtung (40) aufweist, wobei das Verfahren weiter aufweist ein Empfangen eines Passworts über die Eingangsvorrichtung und Senden der Verifizierungsdaten an die Zugangssteuervorrichtung (35) basierend auf dem Passwort.

15. Das Verfahren gemäß Anspruch 9, wobei das Senden der Verifizierungsanforderung ein Senden der Verifizierungsanforderung von der Zugangssteuervorrichtung (35) an die Verifizierungsvorrichtung (38) über ein Weitbereichsnetzwerk (39) aufweist.

## Revendications

1. Système d'accès personnel (30) comprenant :
au moins un dispositif de communication mobile sans fil (31) comprenant :
un premier dispositif de communication en champ proche, NFC pour « *Near Field Communication* », (32) ;
un dispositif sans fil (33) ; et
un premier contrôleur (34) couplé audit premier dispositif NFC et audit dispositif sans fil, le premier contrôleur étant configuré pour produire une demande d'accès ;
un dispositif de commande d'accès (35) associé à un point d'accès personnel, le dispositif de commande d'accès comprenant :
un second dispositif NFC (36) configuré pour recevoir la demande d'accès provenant dudit premier dispositif NFC en fonction de sa proximité avec celui-ci ; et
un second contrôleur (37) couplé audit second dispositif NFC, le second contrôleur étant configuré pour produire, après réception de la demande d'accès, une demande de vérification pour ledit au moins un dispositif de communication mobile sans fil, en fonction de la demande d'accès reçue ; et
un dispositif de vérification (38) configuré pour recevoir la demande de vérification provenant dudit dispositif de commande d'accès et, sur cette base, pour envoyer un message de vérification audit au moins un dispositif de communication mobile sans fil ;
ledit premier contrôleur étant en outre configuré pour recevoir le message de vérification via ledit dispositif sans fil et, sur cette base, pour produire des données de vérification ;
ledit second contrôleur étant en outre configuré pour accorder sélectivement un accès personnel en fonction des données de vérification.

2. Système d'accès personnel (30) selon la revendication 1, dans lequel ledit au moins un dispositif de communication mobile sans fil (31) possède un identificateur unique qui lui est associé et dans lequel ledit dispositif de vérification (38) est configuré pour envoyer le message de vérification audit au moins un dispositif de communication mobile sans fil en fonction de l'identificateur unique.

3. Système d'accès personnel (30) selon la revendication 1, dans lequel ledit premier contrôleur (34) est en outre configuré pour envoyer les données de vérification audit dispositif de commande d'accès (35) via ledit premier dispositif NFC (32).

4. Système d'accès personnel (30) selon la revendication 1, dans lequel le message de vérification consiste en au moins l'un des suivants : message de courrier électronique (courriel), message entre homologues, message du service de messages courts (SMS).

5. Système d'accès personnel (30) selon la revendication 1, dans lequel ledit dispositif de communication mobile sans fil (31) comprend en outre un dispositif de saisie (40) couplé audit premier contrôleur (34) et dans lequel ledit premier contrôleur est en outre configuré pour produire les données de vérification en fonction dudit dispositif de saisie.

6. Dispositif de communication mobile sans fil (31) comprenant :
un dispositif de communication en champ proche, NFC pour « *Near Field Communication* », (32) ;
un dispositif sans fil (33) ; et
un contrôleur (34) couplé audit dispositif NFC et audit dispositif sans fil, le contrôleur étant configuré pour :
produire et envoyer une demande d'accès à un dispositif de commande d'accès (35) associé à un point d'accès personnel via ledit dispositif NFC ;
en réponse à l'envoi de la demande d'accès au dispositif de commande d'accès, recevoir un message de vérification provenant d'un dispositif de vérification (38), via ledit dispositif sans fil ; et
produire des données de vérification en fonction du message de vérification reçu, afin de commander au dispositif de commande d'accès (35) d'accorder sélectivement un accès personnel.

7. Dispositif de communication mobile sans fil (31) selon la revendication 6, dans lequel ledit contrôleur (34) est en outre configuré pour envoyer les données de vérification au dispositif de commande d'accès (35) via ledit dispositif NFC (32).

8. Dispositif de communication mobile sans fil (31) selon la revendication 6, comprenant en outre un dispositif de saisie (40) couplé audit contrôleur (34) et dans lequel ledit contrôleur est en outre configuré pour produire les données de vérification en fonction dudit dispositif de saisie.

9. Procédé d'accès personnel, comprenant les étapes consistant à :
produire une demande d'accès à l'aide d'au moins un dispositif de communication mobile sans fil (31) ;
envoyer la demande d'accès dudit au moins un dispositif de communication mobile sans fil à un dispositif de commande d'accès (35), via une communication en champ proche, NFC pour « *Near Field Communication* », en fonction de sa proximité avec celui-ci ;
après communication de la demande d'accès au dispositif de commande d'accès, envoyer une demande de vérification pour ledit au moins un dispositif de communication mobile sans fil entre le dispositif de commande d'accès et un dispositif de vérification (38), en fonction de la demande d'accès reçue ;
envoyer un message de vérification entre le dispositif de vérification et ledit au moins un dispositif de communication mobile sans fil, en fonction de la demande de vérification ;
produire des données de vérification sur ledit au moins un dispositif de communication mobile sans fil en fonction du message de vérification ; et
accorder sélectivement un accès personnel à l'aide du dispositif de commande d'accès, en fonction des données de vérification.

10. Procédé selon la revendication 9, dans lequel ledit au moins un dispositif de communication mobile sans fil (31) possède un identificateur unique qui lui est associé et dans lequel l'étape d'envoi du message de vérification comprend l'étape consistant à envoyer le message de vérification audit au moins un dispositif de communication mobile sans fil en fonction de l'identificateur unique.

11. Procédé selon la revendication 9, comprenant en outre l'étape consistant à envoyer les données de vérification entre ledit au moins un dispositif de communication mobile sans fil (31) et le dispositif de commande d'accès (35) par une communication en champ proche.

12. Procédé selon la revendication 9, dans lequel le message de vérification consiste en au moins l'un des suivants : message de courrier électronique (courriel), message entre homologues, message du service de messages courts (SMS).

13. Procédé selon la revendication 9, dans lequel ledit au moins un dispositif de communication mobile sans fil (31) comprend en outre un dispositif de saisie (40) couplé audit premier contrôleur (34), le procédé comprenant en outre l'étape consistant à produire les données de vérification en fonction du dispositif de saisie.

14. Procédé selon la revendication 9, dans lequel ledit au moins un dispositif de communication mobile sans fil (31) comprend en outre un dispositif de saisie (40), le procédé comprenant en outre les étapes consistant à recevoir un mot de passe via le dispositif de saisie et à envoyer les données de vérification au dispositif de commande d'accès (35) en fonction du mot de passe.

15. Procédé selon la revendication 9, dans lequel l'étape d'envoi de la demande de vérification comprend l'étape consistant à envoyer la demande de vérification entre le dispositif de commande d'accès (35) et le dispositif de vérification (38) via un réseau étendu (39).
